# EUROPÄISCHE PATENTANMELDUNG

(11) **EP 0 568 714 A1**
(43) Veröffentlichungstag der Anmeldung: **10.11.1993**
(21) Anmeldenummer: 92107584.2
(22) Anmeldetag: 05.05.1992
(51) Int. Cl.: B60N 2/24

(54) **Fahrgastsitz**

(71) Anmelder: Ignaz Vogel GmbH & Co KG, Fahrzeugsitze, D-76228 Karlsruhe (DE)
(72) Erfinder: Vogel, Ignaz, 7500 Karlsruhe 41-Stu. (DE)
(74) Vertreter: Trappenberg, Hans

(57) **Zusammenfassung**

Fahrgastsitze in Personenbeförderungsfahrzeugen sollen unschwer den verschiedenen Fahrzeugtypen angepaßt werden können und auch wirtschaftlich herstellbar und montierbar sein. Erreicht wird dies nach der Erfindung dadurch, daß die im Wege der Metallbearbeitung herzustellenden Baugruppen Untergestell, Sitzteil und Rückenlehne montagefertig vorbereitet und in den Fahrgastraum eingebaut werden, daß dann erst, nach Beendigung aller Montagearbeiten und Säuberung des Fahrgastraums, die Polsterung in Form von Polstereinheiten aufgebracht wird.

## Beschreibung

Die Erfindung betrifft einen Fahrgastsitz zur Bestuhlung von Personenbeförderungs-Fahrzeugen, bestehend aus den zusammengefügten Baugruppen Untergestell - Sitzteil - Rückenlehne, wobei, bei Einfachsitzen, auch die beiden Baugruppen Sitzteil und Rückenlehne einstückig zu einer Sitzschale zusammengefaßt sein können, und wobei Sitzteil und Rückenlehne mit einer Polsterung zu versehen sind.

Die Beförderung von Personen in Massen-Personenbeförderungsfahrzeugen wie Autobus, Eisenbahn, Schiff und Flugzeug nimmt immer mehr zu. Infolgedessen müssen auch immer mehr derartige Fahrzeuge eingesetzt und diese Fahrzeuge auch mit Fahrgastsitzen bestuhlt werden. Hierbei ist eine Erhöhung des Komforts bei derartigen Fahrgastsitzen allgemein festzustellen. Genügten vor einigen Jahrzehnten noch einfache Sitzbänke beziehungsweise Sitzschalen aus hartem Material, so müssen nunmehr selbst im Linien-Nahverkehr schon gepolsterte Fahrgastsitze zur Verfügung gestellt werden. Höchster Komfort wird hierbei in Personenbeförderungsfahrzeugen erwartet, die über einen längeren Zeitraum von einigen Tagen oder sogar Wochen, wie dies beispielsweise bei Autobus-Fernreisen der Fall sein kann, benutzt werden. Wichtig ist jedoch auf jeden Fall, daß die heutigen Fahrgastsitze in solchen Personenbeförderungsfahrzeugen stets mit einer bequemen Polsterung zu versehen sind.

Gleichzeitig sollen jedoch auch diese Fahrgastsitze gewichtsmäßig leicht sein und sollen trotzdem den Festigkeitsanforderungen, die an solche Fahrgastsitze zu stellen sind, genügen. Weiter sollen sie auch wirtschaftlich herstellbar und auf einfache und damit wirtschaftliche Art und Weise zu montieren sein. Gleiches gilt auch für die Wartung der Fahrgastsitze, wobei die einfache, kurzzeitig durchzuführende Auswechslung von Verschleißteilen hervorzuheben ist. Schließlich ist bei der Herstellung auch noch darauf zu achten, daß die Fahrgastsitze in verschiedenen Fahrzeugtypen eingesetzt, also auch dem jeweils vorliegenden Platzbedarf angepaßt werden können.

Damit stellt sich die Aufgabe, einen Fahrgastsitz anzugeben, der neben dem Grunderfordernis Stabilität bei niedrigem Gewicht, den Einbau in unterschiedliche Fahrzeugtypen für unterschiedliche Verwendungszwecke, bei wirtschaflticher Herstellung und Montierbarkeit zuläßt. Erreicht wird dies in erfindungsgemäßer Weise dadurch, daß die Baugruppen montagefertig vorbereitet sind, daß die Baugruppen Sitzteil und Rückenlehne jeweils mit Aufnahmeschalen und Befestigungsvorrichtungen zur Aufnahme von Polstereinheiten versehen sind und daß die Polstereinheiten auf Montageplatten angebrachte Polster sind. Die montagefertige Vorbereitung der Baugruppen ohne Polstereinheiten erfolgt rationell mit Metallbearbeitungmaschinen beziehungsweise im Wege der Metallbearbeitung. Diese Metallbearbeitung ist vollkommen getrennt von der Herstellung der Polsterarbeiten, so daß sie unbesorgt vor einer eventuellen Verschmutzung der Polstereinheiten durchgeführt werden kann. Die getrennte Herstellung der Polstereinheiten bedingt lediglich noch das Befestigen der Polster auf Montageplatten in Arbeitsvorgängen bei denen keine Gefahr von Verschmutzung besteht. Da infolgedessen die Arbeiten an den Baugruppen, wie auch diejenigen an den Polstereinheiten vollkommen unabhängig voneinander durchgeführt werden können, ist auch eine wirtschaftliche Herstellungsmöglichkeit für die Durchführung dieser beiden Arbeiten gegeben. Es können nun auch die Baugruppen unabhängig von der Ausführung der Polster hergestellt und dem jeweils zu bestuhlenden Fahrzeugtyp angepaßt werden, was selbstverständlich auch für die Herstellung der Polstereinheiten zutrifft. Diese Anpassung kann in erfindungsgemäßer Weise dadurch unterstützt werden, daß die Baugruppe "Untergestell" aus mindestens einem, mit ober- und unterseitigen Längsnuten versehenen Querträger besteht, an dem (an denen) Füße und/oder Halterungen mittels lösbaren Schraubverbindungen in einstellbarem Abstand voneinander anbringbar sind.

Dem Recyling-Gedanken kann bei den erfindungsgemäßen Fahrgastsitzen dadurch Rechnung getragen werden, daß die Baugruppen aus Stahl und/oder Leichtmetall und die Aufnahmeschalen und die Montageplatten jeweils aus gleichartigem Kunststoff sind und daß verschiedenartige Baustoffe lösbar miteinander verbunden sind.

Besonders vorteilhaft macht sich der erfindungsgemäße Aufbau der Sitze bei deren Montage in einem Personenbeförderungsfahrzeug bemerkbar, wenn nach der Erfindung so vorgegangen wird, daß die Baugruppen Untergestell und darauf Sitzteil und Rückenlehne ohne Polster im Fahrzeug angebracht werden, daß die Polster, wie vorgesehen, als selbständige Einheiten auf Montageplatten aufgebracht werden und daß sodann, nach Erledigung aller anderen Montagearbeiten und Reinigung des Fahrgastraumes die Polstereinheiten an den Baugruppen Rückenlehne und Sitzteil fest aber lösbar befestigt werden. Nicht mehr also wie zuvor werden die komplett mit Polsterung versehenen Fahrgastsitze zur Montage in den Fahrgastraum verbracht und dort neben anderen Montagearbeiten befestigt, sondern es werden lediglich die metallbearbeiteten Baugruppen, also Untergestell, Sitzteil und Rückenlehne im Fahrgastraum angebracht und erst nach Beendigung sämtlicher anderer Arbeiten einschließlich der Säuberungsarbeiten, die Polster auf diesen zuvor montierten Sitzen befestigt. Dies hat nicht nur den Vorteil einer erleichterten Montage, da die Montagearbeiten ohne Rücksicht auf die leicht zu verschmutzenden Polster durchgeführt werden können, sondern bringt auch enorme Vorteile bei der Handlichkeit der zu montierenden Teile, da nun nicht mehr schwere Fahrgast-Doppelsitze, die üblicherweise eingesetzt werden, und die nur von zwei Mann getragen werden können, eingesetzt werden, sondern leicht handhabbare, von einem einzelnen Montagearbeiter manipulierbare Baugruppen. Gerade unter den recht beengten Montageverhältnissen erbringt diese einfache Handhabbarkeit sehr große Montagevorteile und damit eine deutliche Herabsetzung der Montagezeit beziehungsweise auch der Montagekosten. Das Aufsetzen der Polster auf die so vorbereiteten Fahrgastsitze ist eine letzte, auch wiederum sehr einfach durchzuführende Arbeit, da nun nur noch die verhältnismäßig leichten Polstereinheiten aufgesetzt werden müssen, wobei eine Verschmutzung dieser Polsterteile nun nicht mehr zu befürchten ist.

Die Polstereinheiten sollen hierbei fest aber lösbar auf den Baugruppen befestigt werden, wobei auch darauf zu achten ist, daß sie nicht ohne weiteres von den Baugruppen zu entfernen sind. Dem kann nach einem weiteren Merkmal der Erfindung auch dadurch Rechnung getragen werden, daß die Polstereinheit "Rückenlehne" bei Fahrgastsitzen mit verschwenkbarer Rückenlehne nach der Befestigung der Polstereinheit "Sitz" an der in verschwenkter Stellung befindlichen Rückenlehne fest aber lösbar festgelegt wird, so daß sie sich in aufrechter Stellung der Rückenlehne oberhalb der Polstereinheit "Sitz" befindet. Die Demontage der Polstereinheit "Rückenlehne" kann also erst dann erfolgen, wenn sich die Rückenlehne in verschwenkter Lage befindet. Ist die Rückenlehne in aufrechter Stellung, ist sowohl das Entfernen der Polstereinheit "Sitz" wie auch das Entfernen der Polstereinheit "Rückenlehne" nicht möglich. Dadurch wird dem vorgebeugt, daß randalierende Passagiere die Polstereinheiten von den Baugruppen lösen können. Dies bringt auch den montagetechnischen Vorteil mit sich, daß die Montage über Federklammern etc. erfolgen kann, also keine montageaufwendige Schraubverbindung notwendig ist.

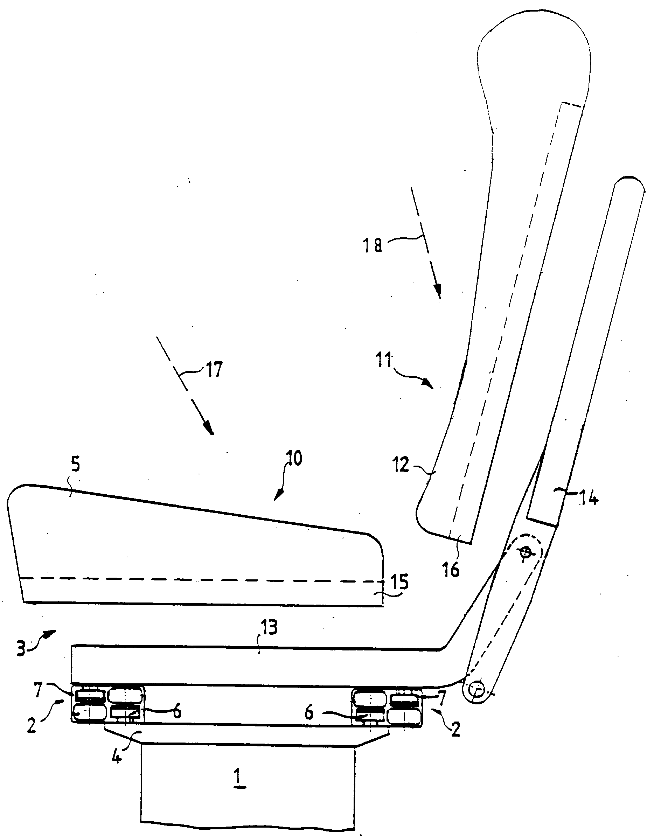

Auf der Zeichnung ist ein Ausführungsbeispiel der Erfindung schematisch dargestellt. Eine Baugruppe Untergestell wird hier gebildet aus einem Träger (1) mit Längsträger (4) und auf dem Längsträger (4) angebrachten Querträgern (2), die unterseitige Längsnuten (6) und oberseitige Längsnuten (7) aufweisen. Die Querträger (2) sind mittels in die unterseitigen Längsnuten (6) eingreifenden Schrauben an dem Längsträger (4) befestigt. Die Verwendung solcher mit Längsnuten versehender Querträger läßt eine Anpassung der Träger beziehungsweise des Fahrgastsitzes an die jeweiligen Platzverhältnisse zu. Dies trifft auch zu für die Befestigung eines, eine Aufnahmeschale bildenden Montagerahmens (13) an dem eine Rückenlehne (14) angelenkt ist. Oberhalb dieses Montagerahmens (13) ist eine Polstereinheit "Sitz" (10) oberhalb der Rückenlehne (14) eine Polstereinheit "Rückenlehne" (11) gezeichnet. Diese Polstereinheiten (10,11) bestehen aus dem eigentlichen Polster (5,12) die auf Montageplatten (15,16) angebracht sind. Zur Montage werden diese Polstereinheiten (10,11), wie die gestrichelten Pfeile (17,18) andeuten in den Montagerahmen (13) beziehungsweise die Rückenlehne (14) verbracht und mittels beispielsweise Federklammern in dieser Lage gehalten. Der Montagerahmen (13) wie auch die Rückenlehne (14) bilden hierbei Aufnahmeschalen für die Montageplatten (15,16) sodaß die Polster vollkommen geschützt innerhalb dieser Aufnahmeschalen angebracht sind. Der Deutlichkeit halber sind hierbei nicht die den Montagerahmen (13) abdeckende Blende sowie eine die Rückenlehne (14) rückseitig abdeckende Rückenschale eingezeichnet.

## Patentansprüche

1. Fahrgastsitz zur Bestuhlung von Personenbeförderungs-Fahrzeugen, bestehend aus den zusammenzufügenden Baugruppen Untergestell - Sitzteil - Rückenlehne, wobei, bei Einfachsitzen, auch die beiden Baugruppen Sitzteil und Rückenlehne einstückig zu einer Sitzschale zusammengefaßt sein können, und wobei Sitzteil und Rückenlehne mit einer Polsterung zu versehen sind,
dadurch gekennzeichnet,
daß die Baugruppen (1, 3, 14) montagefertig vorbereitet sind, daß die Baugruppen Sitzteil (3) und Rückenlehne (14) jeweils mit Aufnahmeschalen (13) und Befestigungsvorrichtungen zur Aufnahme von Polstereinheiten (10, 11) versehen sind und daß die Polstereinheiten (10, 11) auf Montageplatten (15, 16) angebrachte Polster (5, 12) sind.

2. Fahrgastsitz nach Anspruch 1,
dadurch gekennzeichnet,
daß die Baugruppe Untergestell (1) aus mindestens einem mit ober- und unterseitigen Längsnuten (6, 7) versehenen Querträger (2) besteht, an dem (an denen) Träger und/oder Halterungen mittels lösbaren Schraubverbindungen in einstellbarem Abstand voneinander anbringbar sind.

3. Fahrgastsitz nach Anspruch 1 oder 2,
dadurch gekennzeichnet,
daß die Baugruppen (1, 3, 14) aus Stahl und/oder Leichtmetall und die Aufnahmeschalen und die Montageplatten (15, 16) jeweils aus gleichartigem Kunststoff sind und daß verschiedenartige Baustoffe lösbar miteinander verbunden sind.

4. Verfahren zum Anbringen der Fahrgastsitze nach den Ansprüchen 1 bis 3 in einem Personenbeförderungsfahrzeug,
dadurch gekennzeichnet,
daß die Baugruppen Untergestell (1) und darauf Sitzteil (3) und Rückenlehne (14) ohne Polster (5, 12) im Fahrzeug angebracht werden, daß die Polster (5, 12) als selbständige Einheiten (10, 11) auf Montageplatten (15, 16) aufgebracht werden und daß sodann nach Erledigung aller anderen Montagearbeiten und Reinigung des Fahrgastraumes die Polstereinheiten (10, 11) an den Baugruppen Sitzteil (3) und Rückenlehne (14) fest aber lösbar befestigt werden.

5. Verfahren zum Anbringen der Fahrgastsitze nach Anspruch 4,
dadurch gekennzeichnet,
daß die Polstereinheit "Rückenlehne" (11) bei Fahrgastsitzen mit verschwenkbarer Rückenlehne nach der Befestigung der Polstereinheiten "Sitz" (10) an der in verschwenkter Stellung befindlichen Rückenlehne (14) fest aber lösbar befestigt wird, so daß sie sich in aufrechter Stellung der Rückenlehne (14) oberhalb der Polstereinheit "Sitz" (10) befindet.
